# FASCICULE DE BREVET EUROPEEN

(11) **EP 0 993 763 B1**
(45) Date de publication et mention de la délivrance du brevet: **14.01.2004**
(21) Numéro de dépôt: 99440265.9
(22) Date de dépôt: 01.10.1999
(51) Int. Cl.: A01B 71/08

(54) **Machine agricole**
Landmaschine
Agricultural machine

(30) Priorité: 16.10.1998 FR 9813091
(43) Date de publication de la demande: 19.04.2000
(73) Titulaire: KUHN S.A., 67706 Saverne Cedex (FR)
(72) Inventeur: Neuerburg Horst, 67700 Saverne (FR); Kieffer, Fernand, 67700 Saverne (FR)

(56) Documents cités:
- EP-A- 0 343 451
- EP-A- 0 800 757
- FR-A- 2 323 307
- FR-A- 2 760 934
- GB-A- 2 171 884

## Description

La présente invention se rapporte au domaine technique général des machines agricoles et, en particulier, des machines agricoles comportant un mécanisme de traitement animé par des organes de transmission. Ces derniers sont en général destinés à être reliés à une prise de force d'un tracteur.

Ces machines agricoles peuvent en outre présenter un mécanisme de traitement susceptible de prendre deux positions différentes telles qu'une position de travail et une position de transport par exemple. Le passage d'une position vers l'autre, par exemple par pivotement, impose alors une construction particulière des organes de transmission. Ces derniers présentent par exemple une articulation, en général du type accouplement à joint(s) universel(s), associée à un élément de protection. L'invention concerne plus particulièrement le montage d'un tel élément de protection sur la machine agricole.

Il est largement répandu dans le machinisme agricole de protéger les organes de transmission d'une machine, en particulier les arbres de transmission, au moyen d'éléments de protection présentant une certaine rigidité.

Si ces éléments de protection connus remplissent en général bien leur fonction en conditions normales de travail, il n'en est pas de même lorsque des parties adjacentes d'organes de transmission doivent s'orienter angulairement l'une par rapport à l'autre d'une valeur importante (environ 90° par exemple).

En effet, si l'élément de protection correspondant enserre intimement les deux parties d'organes de transmission en utilisation normale, il en résulte qu'il subit une déformation importante lorsque les deux parties d'organes de transmission s'orientent angulairement l'une par rapport à l'autre. Au bout d'un certain nombre de déformations importantes, l'élément de protection risque alors d'être endommagé, ce qui ne lui permet plus d'assurer pleinement sa fonction.

Si, l'élément de protection a une dimension suffisante pour ne pas subir de déformations importantes quand les deux parties d'organes de transmission s'orientent angulairement l'une par rapport à l'autre, ledit élément de protection aura certes une durée de vie accrue, mais la protection ne sera alors pas assurée correctement notamment lorsque les deux parties d'organes de transmission sont sensiblement en ligne.

Par ailleurs on connaît des éléments de protection du type soufflets souples. Mais leur souplesse devrait être telle qu'ils ne pourraient pas assurer le niveau de sécurité généralement demandé dans le machinisme agricole.

Une machine comportant les caractéristiques du préambule de la revendication 1 est connue par EP-A-0 679 327.

L'objet de la présente invention vise donc à remédier aux inconvénients de l'état de la technique décrits ci-dessus.

L'objet assigné à la présente invention est atteint à l'aide d'une machine agricole comportant :
- un châssis,
- un mécanisme de traitement relié au châssis et susceptible de pivoter, au moyen d'une articulation, entre au moins une première position et une deuxième position,
- des organes de transmission destinés à entraîner des outils du mécanisme de traitement, lesdits organes de transmission comportant une première partie associée au châssis, une seconde partie associée au mécanisme de traitement et un système d'accouplement reliant la première partie et la seconde partie desdits organes de transmission,
et
- un élément de protection entourant au moins partiellement ledit système d'accouplement,
laquelle machine agricole est caractérisée en ce que l'élément de protection est monté sur le châssis ou sur un élément solidaire du châssis au moyen d'une articulation de manière à permettre audit élément de protection de pivoter par rapport à ladite première partie des organes de transmission dans le même sens que la seconde partie des organes de transmission lors du pivotement du mécanisme de traitement entre la première position et la deuxième position et/ou vice versa.

D'autres caractéristiques et avantages de l'invention ressortiront de la description détaillée figurant ci-après et faite en référence aux dessins annexés donnés à titre d'exemple non limitatif et dans lesquels :
- la **figure 1** représente une vue de dessus d'une machine agricole conforme à l'invention,
- la **figure 2** représente une partie de la machine agricole de la figure 1,
- la **figure 3** représente une vue similaire à la figure 2, mais partiellement en coupe, la machine agricole étant dans une position de travail,
- la **figure 4** représente une vue similaire à la figure 3, la machine agricole étant dans une position de transport,
- la **figure 5** représente une vue similaire à la figure 3 ; elle montre un deuxième mode de réalisation de l'invention,
- la **figure 6** représente une vue similaire à la figure 4 ; elle montre également le deuxième mode de réalisation de l'invention.

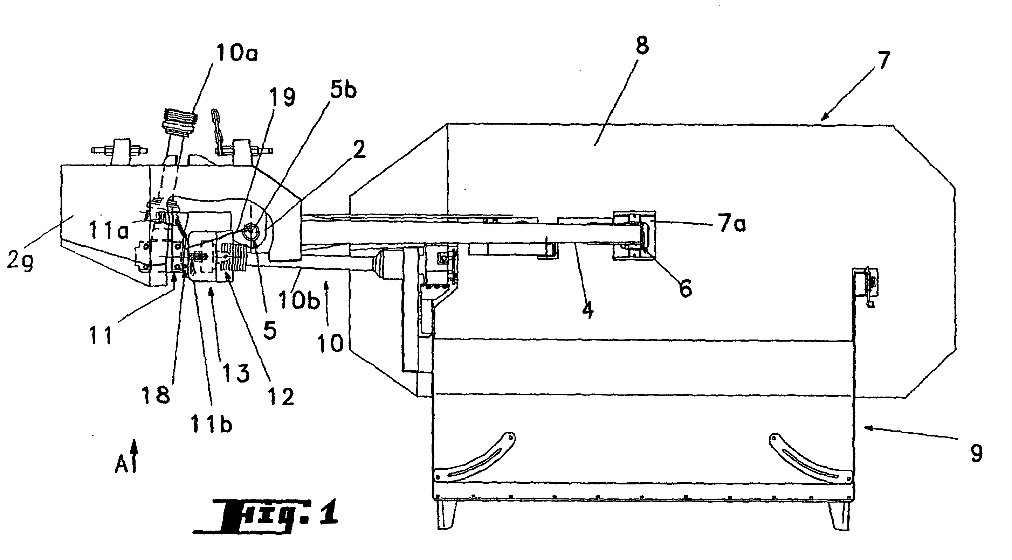

La figure 1 représente donc, en vue de dessus, une machine agricole (1) conforme à l'invention réalisée, à titre d'exemple, sous forme d'une faucheuse-conditionneuse portée arrière. Il est évident que tout autre type de machine agricole peut être concerné par la présente invention.

La machine agricole (1) comprend un châssis (2) lequel est susceptible d'être attelé, de manière connue, au système d'attelage d'un tracteur non représenté. Le châssis (2) comporte un cache (2g) partiellement découpé sur la figure 1.

La machine agricole (1) comprend également une potence (4) articulée à l'une de ses extrémités sur le châssis (2) par l'intermédiaire d'une articulation (5) d'axe (5b) dirigé vers le haut, de préférence sensiblement vertical. L'autre extrémité de la potence (4) présente une articulation (6) d'axe dirigé sensiblement dans la direction d'avance (A) de la machine agricole (1) et supportant un mécanisme de traitement (7). Ce dernier comporte par exemple un mécanisme de coupe (7a). Celui-ci est avantageusement entouré d'un protecteur (8) pour éviter des projections de pierres ou autres débris s'introduisant dans ledit mécanisme de coupe (7a). Ceci s'avère particulièrement intéressant pour les faucheuses à disques.

Le mécanisme de traitement (7) comporte également un dispositif de conditionnement (9) monté ou articulé, de manière connue en soi, sur ledit mécanisme de coupe (7a).

Ledit mécanisme de traitement (7) est animé par des organes de transmission (10). Ceux-ci comportent une première partie (10a - 11) constituée par un premier arbre de transmission (10a) et un carter (11) solidaire du châssis (2). Les organes de transmission (10) comportent ensuite une deuxième partie (10b) comprenant notamment un deuxième arbre de transmission (10b). Ce dernier est, d'une manière connue en soi, en liaison d'entraînement avec des outils rotatifs, non représentés, du mécanisme de traitement (7). Le premier arbre de transmission (10a) et le deuxième arbre de transmission (10b) sont couplés au carter (11). Ce dernier comporte à cet effet respectivement deux embouts : un embout d'entrée (11a) sur lequel est engagé le premier arbre de transmission (10a) et un embout de sortie (11b) qui transmet le mouvement au deuxième arbre de transmission (10b) au moyen d'un accouplement (12). Le premier arbre de transmission (10a) s'étend alors sensiblement selon la direction d'avance (A) et permet à la machine agricole d'être connectée, d'une manière connue, à une prise de force d'un tracteur non représenté. Les embouts (11a, 11b) s'étendent selon des directions orientées à 90° et l'embout de sortie (11b), qui transmet le mouvement au deuxième arbre de transmission (10b), s'étend sensiblement orthogonalement à la direction d'avance (A).

L'accouplement (12) qui, dans cet exemple, fait partie du deuxième arbre de transmission (10b), est du type joint universel et est au moins partiellement entouré par un élément de protection (13).

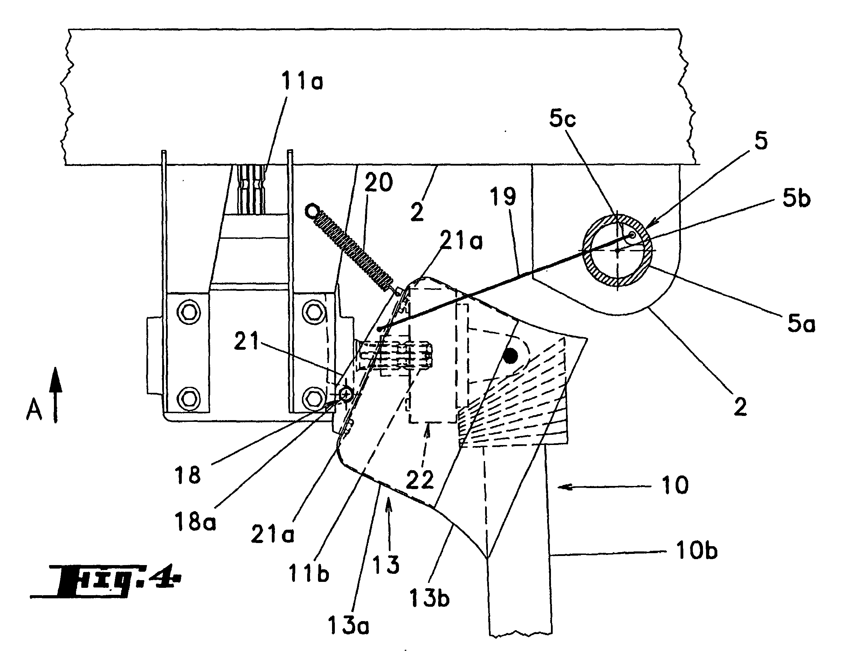

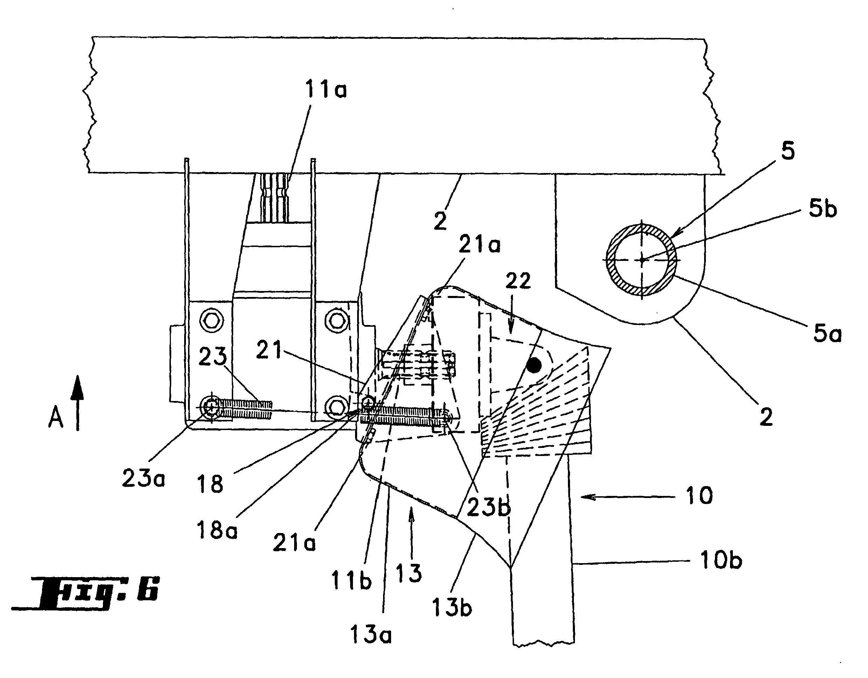

La machine agricole (1) représentée aux figures 1, 2, 3 et 5 se trouve dans une position de travail dans laquelle le mécanisme de traitement (7) s'étend sensiblement orthogonalement à la direction d'avance (A). Le mécanisme de traitement (7) peut cependant également être pivoté autour de l'articulation (5) par l'intermédiaire de la potence (4) et se retrouver ainsi dans une position de transport dans laquelle le mécanisme de traitement (7), la potence (4) et le deuxième arbre de transmission (10b) s'étendent sensiblement selon la direction d'avance (A) (figures 4 et 6).

Le mécanisme de traitement (7) de cet exemple de réalisation est donc susceptible de pivoter entre au moins une position de travail et une position de transport.

Comme visible, le deuxième arbre de transmission (10b) pivote donc avec le mécanisme de traitement (7) lorsque ce dernier change de position par rapport au châssis (2), et ce grâce à l'accouplement (12).

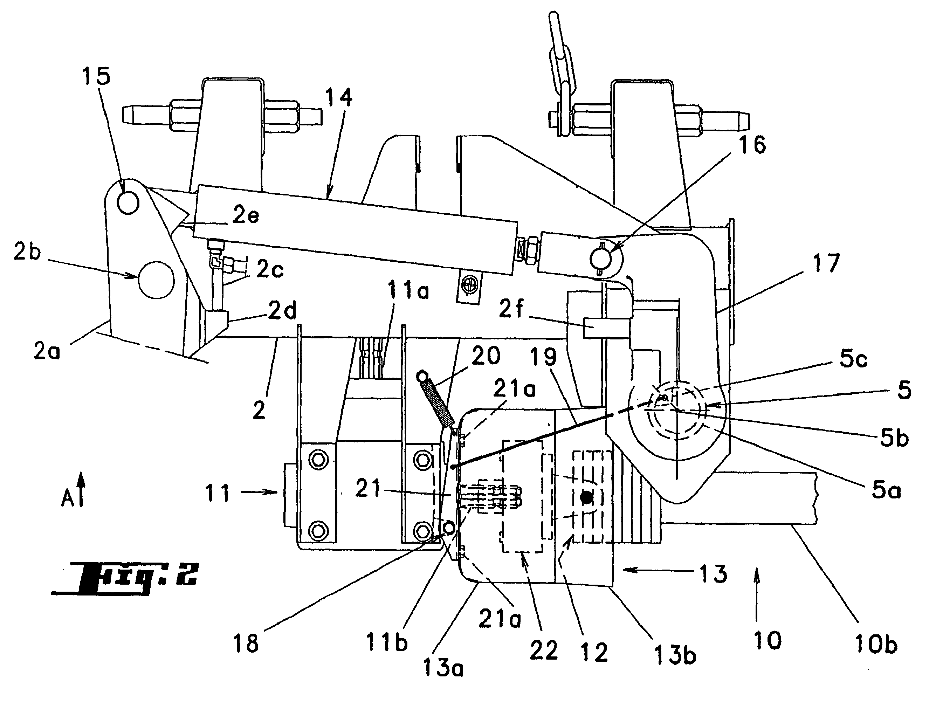

La figure 2 représente un détail de la machine agricole (1) conforme à l'invention et notamment les moyens permettant de faire pivoter le mécanisme de traitement (7) d'une position vers l'autre.

La machine agricole comporte en effet un vérin hydraulique (14) articulé entre des articulations (15) et (16) localisées respectivement sur une bielle (2a) montée pivotante sur le châssis (2), et sur un bras de positionnement (17) solidaire de la potence (4). Ce dernier permet ainsi de faire pivoter la potence (4) autour de l'articulation (5) lors d'une extension ou d'une contraction du vérin hydraulique (14). La bielle (2a) est montée sur le châssis (2) grâce à une articulation (2b). L'amplitude du pivotement de la bielle (2a) est limitée par une butée (2c) solidaire du châssis (2), et ce lorsque le vérin hydraulique (14) est en extension ou en contraction maximale. La bielle (2a) présente à cet effet deux rebords (2d, 2e) susceptibles de venir en appui contre la butée (2c).

Le châssis (2) comporte en outre une autre butée (2f) contre laquelle est appliqué le bras de positionnement (17) quand le mécanisme de traitement (7) se trouve en position de travail.

Le principe de fonctionnement du dispositif de pivotement du mécanisme de traitement (7) de cet exemple de réalisation est bien décrit dans la demande de brevet EP 0 679 327 A1 à laquelle on se reportera en cas de besoin.

L'élément de protection (13) est monté sur le châssis (2) à l'aide d'une articulation (18) permettant ainsi audit élément de protection (13) de pivoter dans le même sens que le deuxième arbre de transmission (10b). La machine agricole (1) conforme à l'invention comporte avantageusement à cet effet un organe d'orientation (19) pour faire pivoter l'élément de protection (13). Ce dernier peut alors accompagner, au moins sur une partie de sa trajectoire de pivotement, l'extrémité correspondante du deuxième arbre de transmission (10b) lorsque le mécanisme de traitement (7) quitte la position de travail (figures 1, 2, 3 et 5) pour la position de transport (figures 4 et 6), et que, ce faisant, le deuxième arbre de transmission (10b) s'oriente angulairement par rapport à l'embout (11b), grâce à l'accouplement (12). L'organe d'orientation (19) relie, de préférence, l'élément de protection (13) ou une pièce solidaire dudit élément de protection (13) à une partie mobile de la machine agricole (1) et plus précisément une partie pivotant avec le mécanisme de traitement (7) telle qu'une pièce solidaire de la potence (4) par exemple. Il est par exemple avantageux de fixer l'une des extrémités de l'organe d'orientation (19) sur une pièce pivotante (5a) de l'articulation (5). Une telle fixation est localisée de manière décalée par rapport à l'axe (5b) de l'articulation (5). Ainsi, lorsque le mécanisme de traitement (7) se déplace vers la position de transport grâce à l'action du vérin hydraulique (14) transmise par le bras de positionnement (17), la pièce pivotante (Sa) tire sur l'organe d'orientation (19), lequel provoque le pivotement de l'élément de protection (13) (figure 4).

L'organe d'orientation (19) est, dans cet exemple de réalisation de l'invention, associé à un ressort de rappel (20). Ce dernier est avantageusement monté entre le châssis (2) et l'élément de protection (13) ou une pièce solidaire dudit élément de protection (13). Le ressort de rappel (20) permet à l'élément de protection (13) de suivre le pivotement du deuxième arbre de transmission (10b) lorsque celui-ci passe d'une position de transport à une position de travail, car la pièce pivotante (5a) n'exerce plus, lors d'un tel mouvement, de traction sur l'organe d'orientation (19). C'est sous l'effet de la force de rappel du ressort (20) que l'élément de protection (13) retourne alors dans sa position initiale.

Selon l'exemple de réalisation de la machine agricole (1) conforme à l'invention représentée aux figures 1 à 6, l'élément de protection (13) est constitué d'un support pivotant (21) et d'une partie protectrice (13a), sensiblement cylindrique, laquelle est fixée sur ledit support pivotant (21). Le ressort de rappel (20) et l'organe d'orientation (19) peuvent alors être avantageusement fixés directement sur le support pivotant (21). La partie protectrice (13a) est fixée sur le support pivotant (21) par exemple à l'aide de vis (21a) ou de tous autres moyens connus. Le support pivotant (21) est monté sur le châssis (2) au moyen de l'articulation (18).

La partie protectrice (13a) est par exemple réalisée avec un matériau unique ou une association de matériaux différents. La partie protectrice (13a) est de préférence rigide ou relativement rigide et présente des dimensions adaptées pour entourer au moins partiellement le joint universel (12) muni, le cas échéant, d'un mécanisme limiteur de couple (22). Avantageusement, la partie protectrice (13a) rigide ou relativement rigide peut être complétée d'une zone souple (13b) fixée sur ladite partie protectrice (13a) pour réaliser le côté ouvert de l'élément de protection (13). L'élément de protection (13) orientable comprenant en sus une zone souple (13b) permet d'entourer de manière très importante l'accouplement (12) tout en évitant que ledit élément de protection (13) ne soit soumis à des efforts ou contraintes risquant de le déformer ou de le détériorer lorsque le mécanisme de traitement (7) vient ou est dans la position de transport.

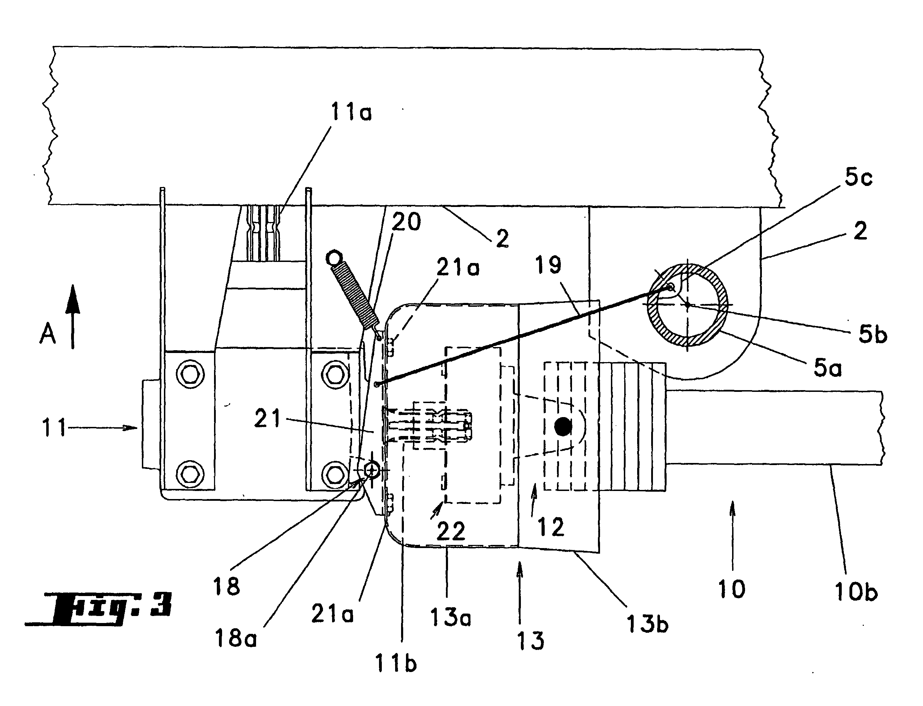

Sur les figures 3 et 4, on voit plus particulièrement que l'articulation (5) est par exemple constituée d'une pièce pivotante (5a) présentant au moins partiellement une forme cylindrique et montée dans un logement cylindrique correspondant ménagé dans le châssis (2). Cette pièce pivotante (5a) est pourvue d'une languette (5c) s'étendant de façon décalée par rapport à l'axe (5b) de l'articulation (5). La languette (5c) est conçue pour y fixer une extrémité de l'organe d'orientation (19).

Selon un autre mode de réalisation de la machine agricole (1) conforme à l'invention, l'articulation (5) peut également comporter un arbre pivotant dans un logement adéquat du châssis (2). D'autres manières de réaliser l'articulation (5) peuvent également être envisagées sans pour autant sortir du cadre de la présente invention.

La figure 4 montre la machine agricole (1) conforme à l'invention dans sa position de transport. Le deuxième arbre de transmission (10b) est alors aligné sensiblement avec la direction d'avance (A). La partie protectrice (13a) et sa zone souple (13b) ainsi que le support pivotant (21) sont basculés dans le même sens que le deuxième arbre de transmission (10b).

Ce basculement n'entrave pas la fonction de protection attribuée à l'élément de protection (13) et permet au deuxième arbre de transmission (10b) de ne pas exercer trop d'efforts ou de contraintes sur la partie protectrice (13a). La zone souple (13b) peut contribuer à ce résultat intéressant, mais c'est surtout le basculement ou le pivotement de l'élément de protection (13) qui réduit significativement l'usure prématurée et les détériorations au cours du temps. Lorsque le mécanisme de traitement (7) se déplace dans la position de transport (figure 4), le pivotement de l'élément de protection (13) se fait à l'encontre de la force de rappel du ressort de rappel (20) et sous l'effet de la traction exercée par l'organe d'orientation (19). L'élément de protection (13) peut donc accompagner le mouvement du mécanisme de traitement (7) en n'altérant pas la sécurité d'utilisation de la machine agricole (1) conforme à l'invention.

La partie protectrice (13a) présente avantageusement une ouverture (non représentée) destinée à être traversée par l'embout (11b). Cette ouverture présente des dimensions suffisantes pour autoriser le basculement ou le pivotement de l'élément de protection (13).

Dans les différentes figures numérotées de 1 à 4, l'organe d'orientation (19) a été représenté de manière schématique. On comprendra que cet organe d'orientation (19) pourra être réalisé par tout type d'organe capable d'exercer une action sur l'élément de protection (13), tel qu'une tringle, un câble, un vérin, etc... Dans le cas où ledit organe d'orientation (19) est constitué d'une tringle rigide, d'un vérin, etc.., on comprendra que le ressort de rappel (20) peut être supprimé. Ce dernier n'est en effet nécessaire que dans le cas d'un organe d'orientation (19) capable de ne transmettre qu'une traction, mais pas de poussée.

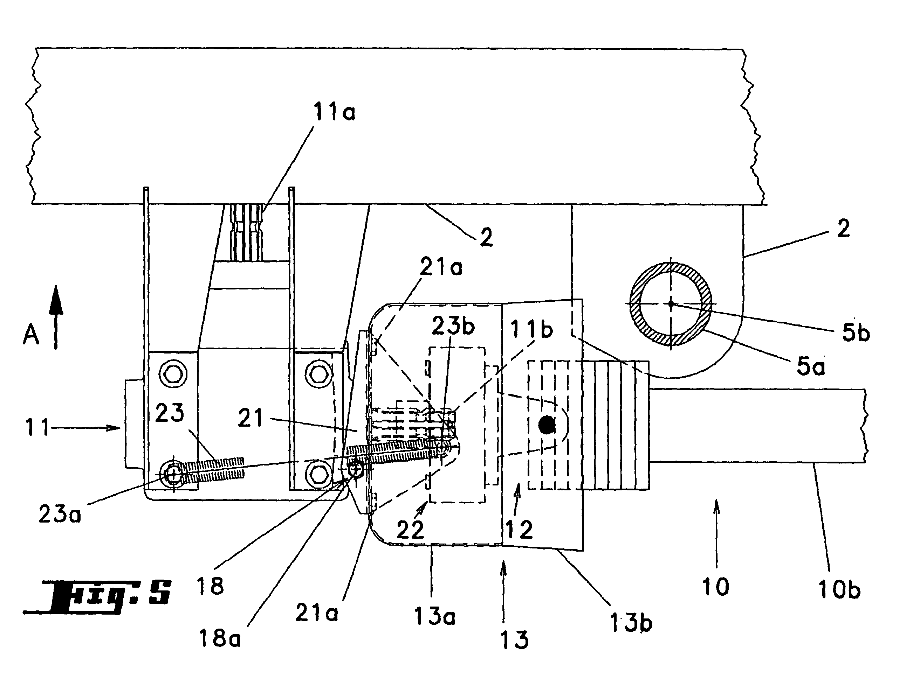

Selon un deuxième mode de réalisation de la machine agricole (1) conforme à la présente invention, l'organe d'orientation (19), le ressort de rappel (20) et la languette (5c) peuvent être remplacés par un unique ressort de traction (23). Les figures 5 et 6 montrent un tel mode de réalisation où ledit ressort de traction (23) est fixé d'une part au carter de renvoi (11) en un point (23a) et d'autre part à l'élément de protection (13) ou à une pièce solidaire dudit élément de protection (13) en un point (23b).

Lorsque la machine agricole (1) passe de la position de travail (figure 5) à la position de transport (figure 6) et inversement, la rotation de l'élément de protection (13) se fait comme suit:
- dans un premier temps, le deuxième arbre de transmission (10b) va venir s'appuyer sur l'élément de protection (13). Ce dernier va commencer à pivoter par rapport au carter de renvoi (11) autour de l'articulation (18) d'axe (18a), ce qui provoque l'élongation du ressort de traction (23). Au cours de cette rotation, l'élément de protection (13) passe par une position appelée point mort caractérisée par le fait que dans cette position, l'axe (18a) et la droite passant par les points (23a) et (23b) se coupent.
- dans un deuxième temps, une fois que l'élément de protection (13) a dépassé le point mort, c'est la force de rappel du ressort de traction (23) et non plus le deuxième arbre de transmission (10b) qui entraîne l'élément de protection (13) jusque dans sa position finale.

On comprendra que la languette (5c), l'organe d'orientation (19) et le ressort de rappel (20) du premier mode de réalisation ainsi que le ressort de traction (23) du deuxième mode de réalisation constituent un moyen d'orientation de l'élément de protection. (13).

De plus, on comprendra que l'invention s'adresse également aux machines agricoles dont le mécanisme de traitement (7) est pivoté vers le haut pour être placé en position de transport.

Et, on comprendra enfin que les deux positions entre lesquelles peut pivoter le mécanisme de traitement (7) pourraient être différentes d'une position de travail et/ou d'une position de transport.

La présente invention trouve son application sur tout type de machines agricoles et notamment sur des faucheuses, faucheuses-conditionneuses, ou sur des machines de travail du sol comme par exemple des herses rotatives repliables.

## Revendications

1. Machine agricole (1) comportant :
- un châssis (2),
- un mécanisme de traitement (7) relié au châssis (2) et susceptible de pivoter par rapport à celui-ci au moyen d'une articulation (5), entre au moins une première position et une deuxième position,
- des organes de transmission (10) destinés à entraîner des outils du mécanisme de traitement (7), lesdits organes de transmission (10) comportant une première partie (10a - 11) associée au châssis (2), une seconde partie (10b) associée au mécanisme de traitement (7), et un système d'accouplement (12) reliant la première partie (10a - 11) et la seconde partie (10b) desdits organes de transmission (10),
et
- un élément de protection (13) entourant au moins partiellement ledit système d'accouplement (12),
***caractérisée en ce* que** l'élément de protection (13) est monté sur le châssis (2), ou sur un élément solidaire du châssis (2), au moyen d'une articulation (18) de manière à permettre audit élément de protection (13) de pivoter par rapport à ladite première partie (10a -11) des organes de transmission 10 dans le même sens que la seconde partie (10b) des organes de transmission (10) lors du pivotement du mécanisme de traitement (7) entre la première position et la deuxième position et /ou vice versa.

2. Machine agricole selon la revendication 1, ***caractérisée en ce* qu'**elle comporte un moyen d'orientation (5c, 19, 20 ; 23) agissant sur l'élément de protection (13) et susceptible de faire pivoter ledit élément de protection (13) lors du pivotement du mécanisme de traitement (7) entre la première position et la deuxième position et/ou vice versa.

3. Machine agricole selon la revendication 2, ***caractérisée en ce* que** ledit moyen d'orientation (5c, 19, 20) comporte un organe d'orientation (19) reliant l'élément de protection (13) à une partie mobile (5a) de ladite machine et susceptible de faire pivoter ledit élément de protection (13) lors du pivotement du mécanisme de traitement (7) entre la première position et la deuxième position et/ou vice versa.

4. Machine agricole selon la revendication 3, ***caractérisée en ce* que** la partie mobile (Sa) est solidaire du mécanisme de traitement (7).

5. Machine agricole selon la revendication 3 ou 4, ***caractérisée en ce* que** l'organe d'orientation (19) est constitué d'un organe capable de ne transmettre qu'une traction.

6. Machine agricole selon la revendication *5,* ***caractérisée en ce* que** l'organe d'orientation (19) est associé à un ressort de rappel (20) que comporte également ledit moyen d'orientation (5c, 19, 20), lequel ressort de rappel (20) agit également sur l'élément de protection (13) mais dans le sens contraire à l'action de l'organe d'orientation (19).

7. Machine agricole selon la revendication 6, ***caractérisée en ce* que** le ressort de rappel (20) est monté entre l'élément de protection (13) et le châssis (2).

8. Machine agricole selon la revendication 2, ***caractérisée en ce* que** ledit moyen d'orientation (5c, 19, 20 ; 23) comporte un unique ressort de traction (23).

9. Machine agricole selon la revendication 8, ***caractérisée en ce* que** le ressort de traction (23) est monté entre l'élément de protection (13) et le châssis (2) ou un élément solidaire dudit châssis (2).

10. Machine agricole selon la revendication 9, ***caractérisée en ce* que** le ressort de traction (23) est implanté dans le voisinage de l'articulation (18) liant l'élément de protection (13) au châssis (2) ou à un élément solidaire dudit châssis (2), ledit ressort de traction (23) passant d'un côté de l'articulation (18) à l'autre lors du pivotement du mécanisme de traitement (7) entre la première position et la deuxième position et/ou vice versa.

11. Machine agricole selon l'une quelconque des revendications 1 à 10, ***caractérisée en ce* que** l'élément de protection (13) est constitué d'un support pivotant (21) et d'une partie protectrice (13a) fixée sur ledit support pivotant (21).

12. Machine agricole selon la revendication 11, ***caractérisée en ce* que** la partie protectrice (13a) est au moins partiellement rigide.

13. Machine agricole selon l'une quelconque des revendications 1 à 12, ***caractérisée en ce* que** le système d'accouplement (12) comprend un mécanisme limiteur de couple (22).

14. Machine agricole selon l'une quelconque des revendications 1 à 13, ***caractérisée en ce* que** l'axe longitudinal (18a) de l'articulation (18) liant l'élément de protection (13) au châssis (2), ou à un élément solidaire dudit châssis (2), est sensiblement parallèle à l'axe longitudinal (5b) de l'articulation (5) autour duquel peut pivoter le mécanisme de traitement (7).

15. Machine agricole selon l'une quelconque des revendications 1 à 14, ***caractérisée en ce* que** l'axe longitudinal (5b) de l'articulation (5) autour duquel peut pivoter le mécanisme de traitement (7) est dirigé vers le haut.

16. Machine agricole selon l'une quelconque des revendications 1 à 15,
***caractérisée en ce* que :**
- la première partie (10a - 11) des organes de transmission (10) comporte un carter de renvoi (11) muni d'un embout de sortie (11b),
- la deuxième partie (10b) des organes de transmission (10) comporte un deuxième arbre de transmission, et
- le système d'accouplement (12) lie le deuxième arbre de transmission à l'embout de sortie (11b) du carter de renvoi (11).

17. Machine agricole selon l'une quelconque des revendications 1 à 16, ***caractérisée en ce* que** le système d'accouplement (12) est du type joint(s) universel(s).

18. Machine agricole selon l'une quelconque des revendications 1 à 17, ***caractérisée en ce* que** la première position est une position de travail et la deuxième position est une position de transport.

19. Machine agricole selon l'une quelconque des revendications 1 à 18, ***caractérisée en ce* qu'**elle constitue une faucheuse ou une faucheuse-conditionneuse.

## Claims

1. Agricultural machine (1) comprising:
- a chassis (2),
- a treatment mechanism (7) connected to the chassis (2) and able to pivot with respect to the latter by means of an articulation (5), between at least a first position and a second position,
- transmission elements (10) intended to drive tools of the treatment mechanism (7), the said transmission elements (10) comprising a first part (10a-11) associated with the chassis (2), a second part (10b) associated with the treatment mechanism (7), and a coupling system (12) connecting the first part (10a-11) and the second part (10b) of the said transmission elements (10), and
- a guard element (13) at least partially surrounding the said coupling system (12),
***characterized in* that** the guard element (13) is mounted on the chassis (2) or on an element secured to the chassis (2), by means of an articulation (18), so as to allow the said guard element (13) to pivot with respect to the said first part (10a-11) of the transmission elements (10) in the same direction as the second part (10b) of the transmission elements (10) as the treatment mechanism (7) pivots between the first position and the second position and/or vice versa.

2. Agricultural machine according to Claim 1, ***characterized in* that** it comprises an orientation means (5c, 19, 20; 23) acting on the guard element (13) and able to cause the said guard element (13) to pivot as the treatment mechanism (7) pivots between the first position and the second position and/or vice versa.

3. Agricultural machine according to Claim 2, ***characterized in* that** the said orientation means (5c, 19, 20) comprises an orientation element (19) connecting the guard element (13) to a moving part (5a) of the said machine and able to cause the said guard element (13) to pivot as the treatment mechanism (7) pivots between the first position and the second position and/or vice versa.

4. Agricultural machine according to Claim 3, ***characterized in* that** the moving part (5a) is secured to the treatment mechanism (7).

5. Agricultural machine according to Claim 3 or 4, ***characterized in* that** the orientation element (19) consists of an element capable of transmitting only traction.

6. Agricultural machine according to Claim 5, ***characterized in* that** the orientation element (19) is associated with a return spring (20) that the said orientation means (5c, 19, 20) also comprises, which return spring (20) also acts on the guard element (13), but in the opposite direction to the action of the orientation element (19).

7. Agricultural machine according to Claim 6, ***characterized in* that** the return spring (20) is mounted between the guard element (13) and the chassis (2).

8. Agricultural machine according to Claim 2, ***characterized in* that** the said orientation means (5c, 19, 20; 23) comprises a single draw-spring (23).

9. Agricultural machine according to Claim 8, ***characterized in* that** the draw-spring (23) is mounted between the guard element (13) and the chassis (2) or an element secured to the said chassis (2).

10. Agricultural machine according to Claim 9, ***characterized in* that** the draw-spring (23) is installed near the articulation (18) linking the guard element (13) to the chassis (2) or to an element secured to the said chassis (2), the said draw-spring (23) passing from one side of the articulation (18) to the other as the treatment mechanism (7) pivots between the first position and the second position and/or vice versa.

11. Agricultural machine according to any one of Claims 1 to 10, ***characterized in* that** the guard element (13) consists of a pivoting support (21) and of a protective part (13a) fixed to the said pivoting support (21).

12. Agricultural machine according to Claim 11, ***characterized in* that** the protective part (13a) is at least partially rigid.

13. Agricultural machine according to any one of Claims 1 to 12, ***characterized in* that** the coupling system (12) comprises a torque limiting mechanism (22).

14. Agricultural machine according to any one of Claims 1 to 13, ***characterized in* that** the longitudinal axis (18a) of the articulation (18) linking the guard element (13) to the chassis (2) or to an element secured to the said chassis (2) is substantially parallel to the longitudinal axis (5b) of the articulation (5) about which the treatment mechanism (7) can pivot.

15. Agricultural machine according to any one of Claims 1 to 14, ***characterized in* that** the longitudinal axis (5b) of the articulation (5) about which the treatment mechanism (7) can pivot is directed upwards.

16. Agricultural machine according to any one of Claims 1 to 15, ***characterized in* that**:
- the first part (10a-11) of the transmission elements (10) comprises a gearbox (11) equipped with an output stub (11b),
- the second part (10b) of the transmission elements (10) comprises a second transmission shaft, and
- the coupling system (12) links the second transmission shaft to the output stub (11b) of the gearbox (11).

17. Agricultural machine according to any one of Claims 1 to 16, ***characterized in* that** the coupling system (12) is of the type involving (a) universal joint(s).

18. Agricultural machine according to any one of Claims 1 to 17, ***characterized in* that** the first position is a work position and the second position is a transport position.

19. Agricultural machine according to any one of Claims 1 to 18, **characterized in that** it constitutes a mower or a mower-conditioner.

## Patentansprüche

1. Landmaschine (1), die
- einen Rahmen (2),
- einen mit dem Rahmen (2) verbundenen Behandlungsmechanismus (7), der mittels eines Gelenks (5) zwischen mindestens einer ersten Stellung und einer zweiten Stellung bezüglich des Rahmens schwenken kann,
- Kraftübertragungselemente (10), die Werkzeuge des Behandlungsmechanismus (7) antreiben sollen, wobei die Kraftübertragungselemente (10) einen dem Rahmen (2) zugeordneten ersten Teil (10a - 11), einen dem Behandlungsmechanismus (7) zugeordneten zweiten Teil (10b) und ein den ersten Teil (10a - 11) und den zweiten Teil (10b) der Kraftübertragungselemente (10) verbindendes Kupplungssystem (12) aufweisen,
und
- ein das Kupplungssystem (12) zumindest teilweise umgebendes Schutzelement (13),
umfasst, ***dadurch gekennzeichnet,* dass** das Schutzelement (13) mittels eines Gelenks (18) so am Rahmen (2) oder an einem fest mit dem Rahmen (2) verbundenen Element angebracht ist, dass das Schutzelement (13) beim Schwenken des Behandlungsmechanismus (7) zwischen der ersten Stellung und der zweiten Stellung und/oder umgekehrt bezüglich des ersten Teils (10a - 11) der Kraftübertragungselemente (10) in die gleiche Richtung wie der zweite Teil (10b) der Kraftübertragungselemente (10) schwenken kann.

2. Landmaschine nach Anspruch 1, ***dadurch gekennzeichnet,* dass** sie ein auf das Schutzelement (13) einwirkendes Ausrichtungsmittel (5c, 19, 20; 23) aufweist, das das Schutzelement (13) beim Schwenken des Behandlungsmechanismus (7) zwischen der ersten Stellung und der zweiten Stellung und/oder umgekehrt schwenken kann.

3. Landmaschine nach Anspruch 2, ***dadurch gekennzeichnet,* dass** das Ausrichtungsmittel (5c, 19, 20) ein das Schutzelement (13) mit einem beweglichen Teil (5a) der Maschine verbindendes Ausrichtungselement (19) aufweist, das das Schutzelement (13) beim Schwenken des Behandlungsmechanismus (7) zwischen der ersten Stellung und der zweiten Stellung und/oder umgekehrt schwenken kann.

4. Landmaschine nach Anspruch 3, ***dadurch gekennzeichnet,* dass** der bewegliche Teil (5a) fest mit dem Behandlungsmechanismus (7) verbunden ist.

5. Landmaschine nach Anspruch 3 oder 4, ***dadurch gekennzeichnet,* dass** das Ausrichtungselement (19) aus einem Element besteht, das nur eine Zugkraft übertragen kann.

6. Landmaschine nach Anspruch 5, ***dadurch gekennzeichnet,* dass** das Ausrichtungselement (19) einer Rückholfeder (20) zugeordnet ist, die ebenfalls am Ausrichtungsmittel (5c, 19, 20) vorgesehen ist, wobei die Rückholfeder (20) ebenfalls auf das Schutzelement (13) einwirkt, aber in der der Wirkung des Ausrichtungselements (19) entgegengesetzten Richtung.

7. Landmaschine nach Anspruch 6, ***dadurch gekennzeichnet,* dass** die Rückholfeder (20) zwischen dem Schutzelement (13) und dem Rahmen (2) angebracht ist.

8. Landmaschine nach Anspruch 2, ***dadurch gekennzeichnet,* dass** das Ausrichtungsmittel (5c, 19, 20; 23) eine einzige Zugfeder (23) aufweist.

9. Landmaschine nach Anspruch 8, ***dadurch gekennzeichnet,* dass** die Zugfeder (23) zwischen dem Schutzelement (13) und dem Rahmen (2) oder einem fest mit dem Rahmen (2) verbundenen Element angebracht ist.

10. Landmaschine nach Anspruch 9, ***dadurch gekennzeichnet,* dass** die Zugfeder (23) in der Nähe des das Schutzelement (13) mit dem Rahmen (2) oder mit einem fest mit dem Rahmen (2) verbundenen Element verbindenden Gelenks (18) angebracht ist, wobei sich die Zugfeder (23) beim Schwenken des Behandlungsmechanismus (7) zwischen der ersten Stellung und der zweiten Stellung und/oder umgekehrt von einer Seite des Gelenks (18) zur anderen gelangt.

11. Landmaschine nach irgend einem der Ansprüche 1 bis 10, ***dadurch gekennzeichnet,* dass** das Schutzelement (13) aus einer Schwenkstütze (21) und einem an der Schwenkstütze (21) befestigten Schutzteil (13a) besteht.

12. Landmaschine nach Anspruch 11, ***dadurch gekennzeichnet,* dass** das Schutzteil (13a) zumindest teilweise starr ist.

13. Landmaschine nach irgend einem der Ansprüche 1 bis 12, ***dadurch gekennzeichnet,* dass** das Kupplungssystem (12) einen Drehmomentbegrenzungsmechanismus (22) enthält.

14. Landmaschine nach irgend einem der Ansprüche 1 bis 13, ***dadurch gekennzeichnet,* dass** die Längsachse (18a) des das Schutzelement (13) mit dem Rahmen (2) oder mit einem fest mit dem Rahmen (2) verbundenen Element verbindenden Gelenks (18) im Wesentlichen parallel zur Längsachse (5b) des Gelenks (5) verläuft, um das der Behandlungsmechanismus (7) schwenken kann.

15. Landmaschine nach irgend einem der Ansprüche 1 bis 14, ***dadurch gekennzeichnet,* dass** die Längsachse (5b) des Gelenks (5), um die der Behandlungsmechanismus (7) schwenken kann, nach oben gerichtet ist.

16. Landmaschine nach irgend einem der Ansprüche 1 bis 15, ***dadurch gekennzeichnet,* dass**:
- der erste Teil (10a - 11) der Kraftübertragungselemente (10) ein Getriebegehäuse (11) aufweist, das mit einem Ausgangsansatz (11b) versehen ist,
- der zweite Teil (10b) der Kraftübertragungselemente (10) eine zweite Kraftübertragungswelle aufweist, und
- das Kupplungssystem (12) die zweite Kraftübertragungswelle mit dem Ausgangsansatz (11b) des Getriebegehäuses (11) verbindet.

17. Landmaschine nach irgend einem der Ansprüche 1 bis 16, ***dadurch gekennzeichnet,* dass** das Kupplungssystem (12) der Kardangelenk(e)art ist.

18. Landmaschine nach irgend einem der Ansprüche 1 bis 17, ***dadurch gekennzeichnet,* dass** die erste Stellung eine Arbeitsstellung und die zweite Stellung eine Transportstellung ist.

19. Landmaschine nach irgend einem der Ansprüche 1 bis 18, ***dadurch gekennzeichnet,* dass** sie eine Mähmaschine oder einen Mähknickzetter bildet.
